(19) Europäisches Patentamt
European Patent Office
Office européen des brevets

(11) EP 1 606 998 B1

(12) EUROPÄISCHE PATENTSCHRIFT

(45) Veröffentlichungstag und Bekanntmachung des Hinweises auf die Patenterteilung:
**17.10.2007 Patentblatt 2007/42**

(51) Int Cl.:
***A01N 43/32*** (2006.01) ***A01N 43/653*** (2006.01)

(21) Anmeldenummer: **05016043.1**

(22) Anmeldetag: **30.06.2003**

(54) **Fungizide Mischungen auf Basis von Dithianon**

Fungicidal mixtures based on dithianon

Mélanges fongicides à base de dithianone

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **10.07.2002 DE 10231295**

(43) Veröffentlichungstag der Anmeldung:
**21.12.2005 Patentblatt 2005/51**

(62) Dokumentnummer(n) der früheren Anmeldung(en) nach Art. 76 EPÜ:
**03763664.4 / 1 521 527**

(73) Patentinhaber: **BASF Aktiengesellschaft**
**67056 Ludwigshafen (DE)**

(72) Erfinder:
- **Ammermann, Eberhard, Dr.**
  **64646 Heppenheim (DE)**
- **Stierl, Reinhard, Dr.**
  **67251 Freinsheim (DE)**
- **Schöfl, Ulrich, Dr.**
  **68782 Brühl (DE)**
- **Schelberger, Klaus**
  **67161 Gönnheim (DE)**
- **Scherer, Maria**
  **76829 Landau (DE)**
- **Henningsen, Michael, Dr.**
  **67227 Frankenthal (DE)**
- **Evan Gold, Randall, Dr.**
  **67283 Obrigheim (DE)**

(56) Entgegenhaltungen:
**DE-A- 3 609 645** **DE-A- 4 318 372**

- **DATABASE CA [Online] CHEMICAL ABSTRACTS SERVICE, COLUMBUS, OHIO, US; H.FLEMMING ET AL.: "Dithianon; an organic compound with wide fungicidal efficiency" XP002259625 gefunden im STN-INTERNATIONAL Database accession no. 60:5851 CA & ZEITSCHRIFT FÜR PFLANZNKRANKHEITEN UND PFLANZENSCHUTZ, Bd. 70, Nr. 1, 1963, Seiten 4-11,**
- **DATABASE CA [Online] CHEMICAL ABSTRACTS SERVICE, COLUMBUS, OHIO, US; P.E.RUSSELL ET AL.: "Fluquinconazole, a novel broad-spectrum fungicide for foliar application" XP002274263 gefunden im STN-INTERNATIONAL Database accession no. 118: 185737 CA & BROGHTON DROP PROTECTION CONFERENCE -- PESTS AND DISEASES, Nr. 1, 1992, Seiten 411-418,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Mischungen, enthaltend

A) die Verbindung der Formel I

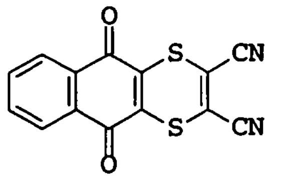

I

und

B) das Azolderivat II

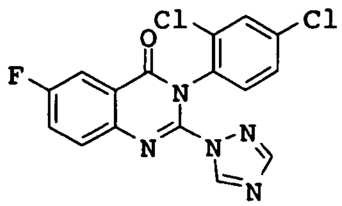

II

in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.

Die Verbindung der Formel I (common name: dithianon) sowie Verfahren zu ihrer Herstellung sind in GB-A 857 383 und der Zeitschrift für Pflanzenkrankheiten und Pflanzenschutz (1963), Bd. 70 (Nr. 1), S. 4-11 beschrieben.

Mischungen der Verbindung I mit anderen Azoldervaten sind aus DE-OS 36 09 645 bekannt.

Mischungen der Verbindung II mit andren Wirkstoffen sind aus DE-OS 43 18 372 bekannt.

Die Verbindung der Formel II (common name: fluquinconazole) ihre Herstellung und ihre Wirkung gegen Schadpilze ist ebenfalls aus der Literatur bekannt: Pesticide Manunal, 12th Ed., p.449 (2000); Brighton Crop Protection Conference-Pests and Diseases (1992), Bd. 1, S. 411-418.

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

Üblicherweise kommen Mischungen der Verbindung I mit einem Azolderivat II zur Anwendung. Unter Umständen können jedoch Mischungen der Verbindung I mit zwei oder mehreren Azolderivaten II vorteilhaft sein.

Die Verbindung II ist wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste

weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der *Ascomyceten, Deuteromyceten, Oomyceten* und *Basidiomyceten,* aus. Sie sind z.T. systemisch wirksam und können daher auch als Blatt- und Bodenfungizide eingesetzt werden.

Besondere Bedeutung haben sie für die Bekämpfung von Pilzen an verschiedenen Kulturpflanzen wie Gemüsepflanzen (z.B. Gurken, Bohnen und Kürbisgewächse), Obstpflanzen, Wein, aber auch Gerste, Gras, Hafer, Kaffee, Mais, Roggen, Soja, Weizen, Zierpflanzen, Zuckerrohr und einer Vielzahl von Samen.

Insbesondere eignen sie sich zur Bekämpfung der folgenden pflanzenpathogenen Pilze: *Erysiphe graminis* (echter Mehltau) an Getreide, *Erysiphe cichoracearum* und *Sphaerotheca fuliginea* an Kürbisgewächsen, *Podosphaera leucotricha* an Äpfeln, *Uncinula ne*cator an Reben, *Puccinia-Arten* an Getreide, *Rhizoctonia-Arten* an Baumwolle, Reis und Rasen, *Ustilago-Arten* an Getreide und Zuckerrohr, *Venturia inaequalis* (Schorf) an Äpfeln, *Helminthosporium*-Arten an Getreide, *Septoria nodorum* an Weizen, *Botrytis cinerea* (Grauschimmel) an Erdbeeren, Gemüse, Zierpflanzen und Reben, *Cercospora arachidicola* an Erdnüssen, *Pseudocercosporella herpotrichoides* an Weizen und Gerste, *Pseudoperonospora-Arten* an Kürbisgewächsen und Hopfen, *Plasmopara viticola* an Reben, *Alterna* ria-Arten an Gemüse und Obst sowie *Fusarium*- und *Verticillium-Ar*ten.

Sie sind außerdem im Materialschutz (z.B. Holzschutz) anwendbar, beispielsweise gegen *Paecilomyces variotii.*

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 100:1 bis 1:10, vorzugsweise 10:1 bis 1:1, insbesondere 5:1 bis 1:1 angewandt.

Die Aufwandmengen für die Verbindung I liegen entsprechend in der Regel bei 5 bis 2000 g/ha, vorzugsweise 10 bis 1000 g/ha, insbesondere 50 bis 750 g/ha.

Die Aufwandmengen der erfindungsgemäßen Mischungen liegen je nach Art des gewünschten Effekts für die Verbindungen II bei 5 g/ha bis 500 g/ha, vorzugsweise 50 bis 500 g/ha, insbesondere 50 bis 200 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Beispiele für Formulierungen sind:

1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert

werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die fungizide Wirkung der Verbindungen und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel 1 (nicht erfindungsgemäß): Wirksamkeit gegen den Grauschimmel an Paprikablättern verursacht durch *Botrytis cinerea*

Paprikasämlinge der Sorte "Neusiedler Ideal Elite" wurden, nachdem sich 4 bis 5 Blätter gut entwickelt hatten, mit einer wässrigen Suspension in der unten angegebenen Wirkstoffkonzentration bis zur Tropfnässe besprüht. Am nächsten Tag wurden die behandelten Pflanzen mit einer Sporensuspension von *Botrytis cinerea,* die $1{,}7 \times 10^6$ Sporen/ml in einer 2 %-igen, wässrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.

Die Auswertung erfolgt durch Feststellung der befallenen Blattflächen in Prozent. Diese Prozent-Werte werden in Wirkungsgrade umgerechnet.

Der Wirkungsgrad (W) wird nach der Formel von Abbot wie folgt berechnet:

$$W = (1 - \alpha/\beta)\cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (99 % Befall) | 0 |
| 2 | I (Dithianon) | 16<br>4<br>1<br>0,25 | 0<br>0<br>0<br>0 |
| 3 | II-1 (Metconazol) | 1<br>0,25 | 49<br>0 |
| 4 | II-2 (Epoxiconazol) | 1<br>0,25 | 9<br>9 |
| 5 | II-4 (Tebuconazol) | 4<br>1<br>0,25 | 0<br>0<br>0 |

Tabelle B - Kombinationen

| Beispiel | Wirkstoffmischung Konzentration Mischungsverhältnis | beobachteter Wirkungsgrad | berechneter Wirkungsgrad*) |
|---|---|---|---|
| 6 | I + II-1<br>4 + 0,25 ppm<br>16 : 1 | 19 | 0 |
| 7 | I + II-1<br>4 + 1 ppm<br>4 : 1 | 59 | 49 |
| 8 | 1 + II-1<br>1 + 0,25 ppm<br>4 : 1 | 39 | 0 |
| 9 | I + II-1<br>0,25 + 0,25 ppm<br>1 : 1 | 29 | 0 |
| 10 | I + II-1<br>0,25 + 1 ppm<br>1 : 4 | 59 | 49 |
| 11 | I + II-2<br>4 + 0,25 ppm<br>16 : 1 | 39 | 9 |
| 12 | I + II-2<br>4 + 1 ppm<br>4 : 1 | 49 | 9 |
| 13 | I + II-2<br>1 + 0,25 ppm<br>4 : 1 | 39 | 9 |
| 14 | I + II-2<br>1 + 1 ppm<br>1 : 1 | 59 | 9 |

(fortgesetzt)

| Beispiel | Wirkstoffmischung Konzentration Mischungsverhältnis | beobachteter Wirkungsgrad | berechneter Wirkungsgrad*) |
|---|---|---|---|
| 15 | I + II-2<br>0,25 + 0,25 ppm<br>1:1 | 29 | 9 |
| 16 | I + II-2<br>0,25 + 1 ppm<br>1 : 4 | 44 | 9 |
| 17 | I + II-4<br>4 + 0,25 ppm<br>16 : 1 | 29 | 0 |
| 18 | I + II-4<br>16 + 4 ppm<br>4 : 1 | 59 | 0 |
| 19 | 1 + II-4<br>4 + 1 ppm<br>4 : 1 | 39 | 0 |
| 20 | 1 + II-4<br>1 + 1 ppm<br>1 : 1 | 29 | 0 |
| 21 | I + II-4<br>0,25 + 0,25 ppm<br>1 : 1 | 19 | 0 |
| 22 | I + II-2<br>1 + 4 ppm<br>1 . 4 | 49 | 0 |
| *) berechneter Wirkungsgrad nach der Colby-Formel | | | |

Aus den Ergebnissen des Versuchs geht hervor, daß der beobachtete Wirkungsgrad in allen Mischungsverhältnissen höher ist, als nach der Colby-Formel vorausberechnet.

## Patentansprüche

1. Fungizide Mischung, enthaltend

A) die Verbindung der Formel I

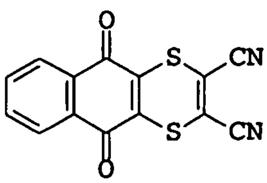

I

und
B) das Azolderivat II

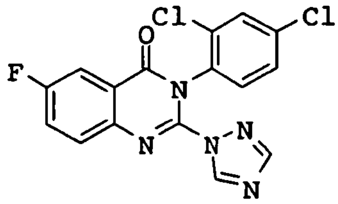

II

in einer synergistisch wirksamen Menge.

2. Fungizide Mischungen nach Anspruch 1, **dadurch gekennzeichnet, daß** das Gewichtsverhältnis der Verbindung I zu der Verbindung II 100:1 bis 1:10 ist.

3. Fungizides Mittel, enthaltend einen festen oder flüssigen Trägerstoff und eine Mischung gemäß Anspruch 1 oder 2.

4. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß Ansprüchen 1 bis 3 behandelt.

5. Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung I gemäß Anspruch 1 behandelt.

6. Verfahren nach Anspruch 4, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha mindestens einer Verbindung II gemäß Anspruch 1 behandelt.

7. Verfahren zur Bekämpfung von *Boytritis cinerea* gemäß Ansprüchen 4 bis 6.

8. Verwendung der Verbindungen der Formeln I und II gemäß Anspruch 1 zur Herstellung einer Mischung gemäß Anspruch 1.

## Claims

1. A fungicidal mixture, comprising

A) the compound of the formula I

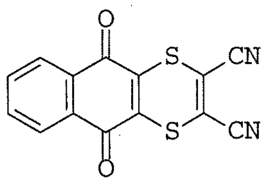

I

and
B) the azole derivative II

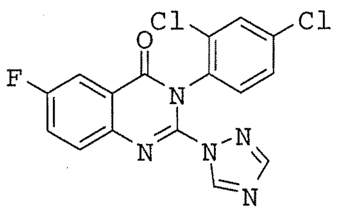

II

in a synergistically effective amount.

2. The fungicidal mixture according to claim 1, wherein the weight ratio of the compound I to the compound II is from 100:1 to 1:10.

3. A fungicidal composition comprising a solid or liquid carrier and a mixture according to claim 1 or 2.

4. A method for controlling harmful fungi, which comprises treating the harmful fungi, their habitat, or the plants, seeds, soils, areas, materials or spaces to be kept free from them with the fungicidal mixture according to claims 1 to 3.

5. The method according to claim 4, which comprises treating the harmful fungi, their habitat, or the plants, seeds, soils, areas, materials or spaces to be kept free from them with from 5 to 2000 g/ha of the compound I according to claim 1.

6. The method according to claim 4, which comprises treating the harmful fungi, their habitat, or the plants, seeds, soils, areas, materials or spaces to be kept free from them with from 5 to 500 g/ha of at least one compound II according to claim 1.

7. The method for controlling *Botritis cinerea* according to claims 4 to 6.

8. The use of the compounds of the formulae I and II according to claim 1 for preparing a mixture according to claim 1.

**Revendications**

1. Mélange fongicide, comprenant

A) le composé de formule I

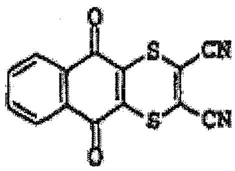

I

et
B) le dérivé azole II

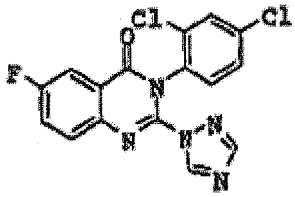

II

en quantité synergétiquement efficace.

2. Mélanges fongicides selon la revendication 1, **caractérisés en ce que** la proportion en poids du composé I par rapport au composé II est de 100 : 1 à 1 : 10.

3. Substance fongicide, comprenant un matériau support solide ou liquide et un mélange selon la revendication 1 ou 2.

4. Procédé de lutte contre les champignons nocifs, **caractérisé en ce que** l'on traite les champignons nocifs, leur milieu naturel ou les plantes, semences, sols, surfaces, matériaux ou emplacements desquels il faut les éliminer avec le mélange fongicide selon les revendications 1 à 3.

5. Procédé selon la revendication 4, **caractérisé en ce que** l'on traite les champignons nocifs, leur milieu naturel ou les plantes, semences, sols, surfaces, matériaux ou emplacements desquels il faut les éliminer avec de 5 à 2000 g/ha du composé I selon la revendication 1.

6. Procédé selon la revendication 4, **caractérisé en ce que** l'on traite les champignons nocifs, leur milieu naturel ou les plantes, semences, sols, surfaces, matériaux ou emplacements desquels il faut les éliminer avec de 5 à 500 g/ha d'au moins un composé II selon la revendication 1.

7. Procédé de lutte contre *Boytritis cinerea* selon les revendications 4 à 6.

8. Utilisation des composés de formules I et II selon la revendication 1 pour la fabrication d'un mélange selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 857383 A
- DE 3609645 A
- DE 4318372 A


### In der Beschreibung aufgeführte Nicht-Patentliteratur


- *Pflanzenkrankheiten und Pflanzenschutz,* 1963, vol. 70 (1), 4-11
- Pesticide Manunal. 2000, 449
- *Brighton Crop Protection Conference-Pests and Diseases,* 1992, vol. 1, 411-418
- **R.S. COLBY.** *Weeds,* 1967, vol. 15, 20-22